# EUROPEAN PATENT APPLICATION

(11) **EP 2 309 401 A1**
(43) Date of publication of application: **13.04.2011**
(21) Application number: 10178588.9
(22) Date of filing: 23.09.2010
(51) Int. Cl.: G06F 17/30, G06F 3/048, G06Q 30/00

(54) **Apparatus, method and program for sorting thumbnails**

(30) Priority: 30.09.2009 JP 2009227550
(71) Applicant: Fujifilm Corporation, Minato-ku Tokyo (JP)
(72) Inventor: Hara, Toshita, Kanagawa-ken (JP); Okamoto, Eiichi, Kanagawa-ken (JP)
(74) Representative: Klunker, Hans-Friedrich

(57) **Abstract**

A workspace 31 is divided into three divisions (31a to 31c) arranged side by side on the same screen (12a). The first division (31a) is for ordering photographic print, the second division (31b) is for pending, and the third division (31c) is for excluding images from the printing. The user allocates one thumbnail to the first division when the user decides to print the image corresponding to the one thumbnail. The user allocates one thumbnail to the third division when the user decides not to print the image corresponding to the one thumbnail. When the user cannot decide whether to print the image corresponding to one thumbnail, the user allocates the one thumbnail to the second division. Image data represented by those thumbnails allocated to the first division is sent to an external device for printing.

## Description

### FIELD OF THE INVENTION

The present invention relates to an apparatus, a method and a program for sorting thumbnails according to the use of contents represented by the thumbnails.

### BACKGROUND OF THE INVENTION

Thumbnails are images that are reduced in size from original images that represent various contents, such as video data, audio data, and game software; thumbnails are widely used as indices for showing the list of the contents. Many methods of sorting thumbnails according to the user CT intention are known in the art, and a variety of suggestions for more convenient and efficient thumbnail sorting operation have been made. For example, JPA No. 2004-255740 suggests a method of displaying thumbnails of photographic images captured by a digital camera. In this prior art, the thumbnails are sorted according to the date of image-capturing so that they may be displayed in groups of ones captured on the same day or in the same month. This prior art also suggests displaying a list of those images selected to be printed from among the captured images. JPA No. 2005-151115 suggests displaying thumbnails of captured images on a display screen of a digital camera in such a manner that the user can designate images for print by filing their thumbnails in a specific folder on the display screen. The thumbnails filed in the folder may be displayed as a list of images designated to be printed. Thus, the user can sort the captured images into ones to be printed and others on the display screen of the digital camera.

Meanwhile, when the user cannot definitely decide how to sort an image, the user often puts such an image on hold, and proceeds to the next image for sorting. In that case, in the methods of the above-mentioned prior arts, the user has to trace the thumbnails of the pending images back in his or her memory after completing sorting other thumbnails. Such manual tracing of the thumbnails in the thumbnail-sorting is obviously inefficient.

### SUMMARY OF THE INVENTION

In view of the foregoing, an object of the present invention is to provide an apparatus, a method and a program for sorting the thumbnails with high efficiency according to the use of the contents.

In an aspect of the present invention, a thumbnail sorting apparatus comprises a display device for displaying first to third thumbnail allocating divisions on a screen; an operating device for a user to move the thumbnails between the thumbnail allocating divisions; and a control device for sorting the contents into groups corresponding to the allocation of the thumbnails to the first to third thumbnail allocating divisions. In the thumbnail sorting apparatus of the present invention, the user allocates one thumbnail to the first thumbnail allocating division when the user decides to use the content corresponding to the one thumbnail; the user allocates one thumbnail to the second thumbnail allocating division when the user cannot decide whether to use the content corresponding to the one thumbnail; and the user allocates one thumbnail to the third thumbnail allocating division when the user decides not to use the content corresponding to the one thumbnail.

Preferably, the user may sort the thumbnails according to whether the corresponding contents should be sent to an external device or not, or received from an external device or not.

In an embodiment where the contents include data of photographic images captured by a digital camera, the user allocates one thumbnail to the first thumbnail allocating division when the user decides to print the photographic image corresponding to the one thumbnail, the user allocates one thumbnail to the second thumbnail allocating division when the user cannot decide whether to print the photographic image corresponding to the one thumbnail, and the user allocates one thumbnail to the third thumbnail allocating division when the user decides not to print the photographic image corresponding to the one thumbnail. Only data of the photographic images represented by those thumbnails allocated to the first thumbnail allocating division is sent to an external device for printing in response to an instruction entered by the user. Preferably, the thumbnails of all photographic images are initially displayed in the first thumbnail allocating division.

In another aspect of the present invention, a thumbnail sorting method for sorting thumbnails according to the use of contents comprises the following steps: displaying first to third divisions on a screen; moving the thumbnails between the first to third divisions to allocate the thumbnails to any of the first to third divisions; and sorting the contents into groups corresponding to the allocation of the thumbnails to the first to third divisions, such that the contents corresponding to those thumbnails allocated to the first division are used, that the use of the contents corresponding to those thumbnails allocated to the second division is pending, and that the contents corresponding to those thumbnails allocated to the third division are not used.

In an embodiment, the thumbnails are sorted according to whether the corresponding contents should be sent to an external device or not, or received from an external device or not, wherein the contents corresponding to those thumbnails allocated to the first division are decided to be sent to or received from an external device, and the contents corresponding to those thumbnails allocated to the third division are decided not to be sent to or received from an external device, whereas the contents corresponding to those thumbnails allocated to the second division are regarded as pending.

The contents may include data of photographic images captured by a digital camera. In this embodiment, one thumbnail is allocated to the first division when data of the photographic image corresponding to the one thumbnail should be sent to an external device for printing, whereas one thumbnail is allocated to the second division when it is not decided whether to print the photographic image corresponding to the one thumbnail, and one thumbnail is allocated to the third division to exclude the photographic image corresponding to the one thumbnail from printing.

A thumbnail sorting program according to the present invention actuates a computer to execute the steps displaying first to third divisions on a screen; moving the thumbnails from one division to another according to instructions from a user to allocate the thumbnails to any of the first to third divisions; and sorting the contents into groups corresponding to the allocation of the thumbnails to the first to third divisions, such that the contents corresponding to those thumbnails allocated to the first division are used, that the use of the contents corresponding to those thumbnails allocated to the second division is pending, and that the contents corresponding to those thumbnails allocated to the third division are not used.

It is to be noted that the term EV se may include recording and downloading the contents. For example, EVsing data of some contents may include recording the data on a recording medium that is loaded in an apparatus, or reading the data from the recording medium. Moreover, ETending data to an external device may include sending image data to an external device via the Internet for the sake of ordering printing or for uploading original images to a Web site. Furthermore, ESeceiving data from an external device may include downloading image data via the Internet.

Because the division for allocating the thumbnails of the pending contents is displayed on the same screen as the division for allocating the thumbnails of the contents decided to be used as well as the division for the thumbnails of the contents decided not to be used, the user need not retrace the thumbnails of the pending contents after deciding the sorting address of other thumbnails.

### BRIEF DESCRIPTION OF THE DRAWINGS

The above and other objects and advantages of the present invention will be more apparent from the following detailed description of the preferred embodiments when read in connection with the accompanied drawings, wherein like reference numerals designate like or corresponding parts throughout the several views, and wherein:
Figure 1 is a schematic diagram illustrating a personal computer;
Figure 2 is a block diagram illustrating a circuitry of the personal computer;
Figure 3 is an explanatory diagram illustrating an image index table;
Figure 4 is an explanatory diagram illustrating a work table;
Figure 5 is an explanatory diagram illustrating a work space in a condition before the thumbnail sorting;
Figure 6 is a flowchart illustrating the procedure for the thumbnail sorting;
Figure 7 is an explanatory diagram illustrating the work space in a condition where some of the thumbnails are being moved for sorting;
Figure 8 is an explanatory diagram illustrating the work space in a condition where a division for the thumbnails for designating printing is wider than other divisions;
Figure 9 is an explanatory diagram illustrating the work space in a condition where a division for the pending thumbnails is widened; and
Figure 10 is an explanatory diagram illustrating the work space in a condition where a division for the thumbnails of those images which are not to be printed is widened.

### DESCRIPTION OF THE PREFERRED EMBODIMENTS

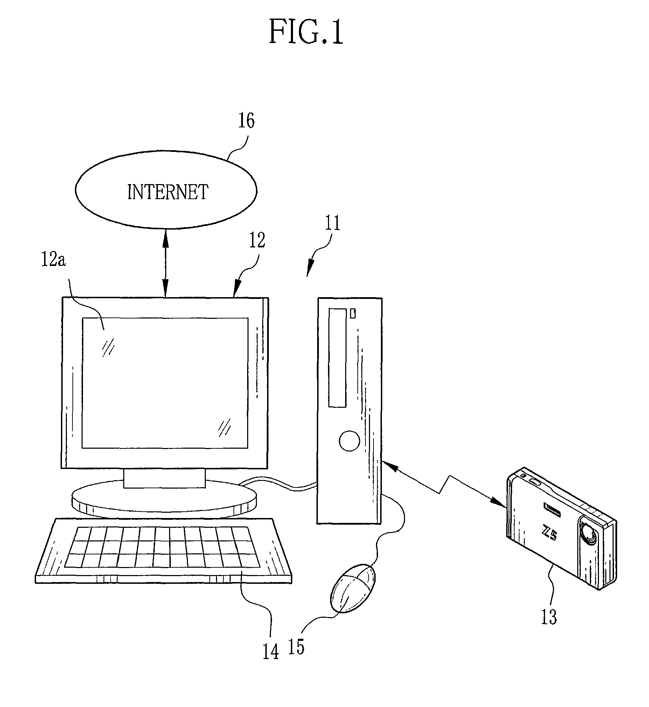

As shown in Fig.1, a thumbnail sorting apparatus includes a personal computer 11 and a thumbnail sorting program installed in the personal computer 11. Into the personal computer 11, image data of photographic images captured by a digital camera 12 may be downloaded via a communication cable or a wireless LAN. When the thumbnail sorting program is executed, thumbnails of the images captured by the digital camera 13 are displayed on a screen 12a of a monitor 12. Then, the user can sort the thumbnails on the screen 12a by operating a mouse 14 of a keyboard 15, according to the intended use of the contents, i.e. the original images represented by the thumbnails. For example, the thumbnails are sorted into ones for ordering printing the original images and others. By sorting the thumbnails, corresponding original images are sorted into ones to be printed and ones not to be printed. Then, image data of the images to be printed is sent through a data communication device, e.g. via the Internet 16, to a photo-lab for printing.

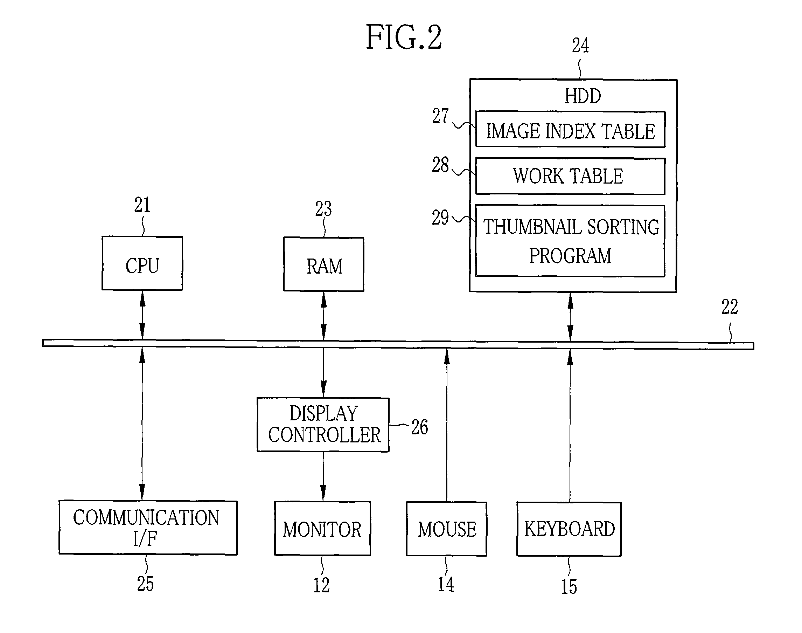

As shown in Fig.2, the personal computer 11 includes a CPU 21. The CPU 21 controls the operation of the personal computer 11 in response to operation signals entered through the mouse 14 and the keyboard 15. A data bus 22 connects the CPU 21 to a RAM 23, a hard disk drive (HDD) 24, a communication interface (I/F) 25 and a display controller 26.

The RAM 23 is a work memory used for the CPU 21 to carry out various operations. The HDD 24 stores various programs and data for operating the personal computer 11. The CPU 21 reads out some program from the HDD 24 and develops the read program on the RAM 23 to execute the program. The image data downloaded from the digital camera 13 is stored in the HDD 24.

The communication interface 25 may for example be a modem or a rooter, and controls communication protocols compatible to the Internet 16, so as to communicate data via the Internet 16. The communication interface 25 also interfaces data communication between the personal computer 11 and external devices such as the digital camera 13. The display controller 26 controls the monitor 12 to display a variety of windows on the screen 12a.

The HDD 24 also stores an image index table 27, a work table 28 and the thumbnail sorting program 29.

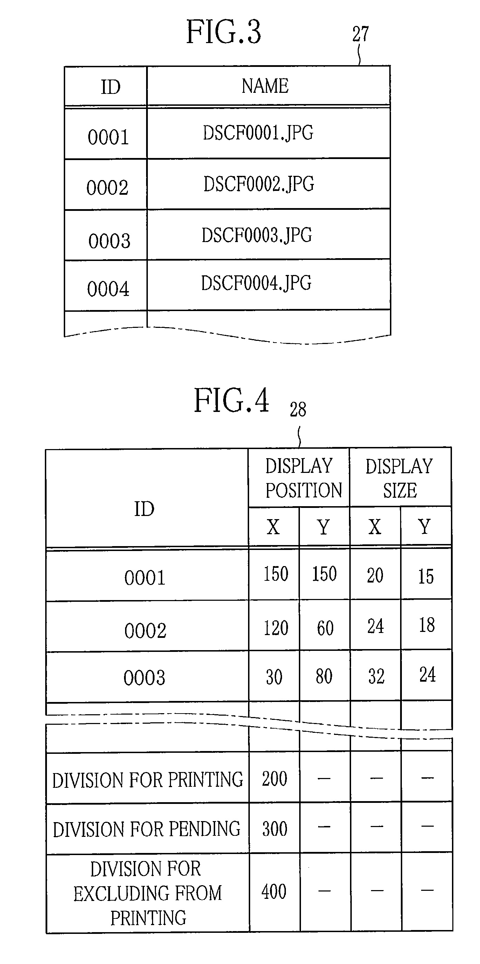

As shown in Fig.3, the image index table 27 memorizes serial identification (ID) numbers that are automatically given to the individual images when the image data of these images is transferred from the digital camera 13 to the personal computer 11. The CPU 21 manages and identifies the image data stored in the HDD 24 with reference to the ID numbers stored in the image index table 27.

Referring to Fig.4, the work table 28 memorizes the present state of the thumbnail sorting. Concretely, the work table 28 memorizes the ID numbers of the individual thumbnails, respective display positions and sizes of the thumbnails on the screen 12a, and ranges of display divisions 31a, 31b and 31c on the screen 12a. The details of the divisions 31a to 31c will be described later.

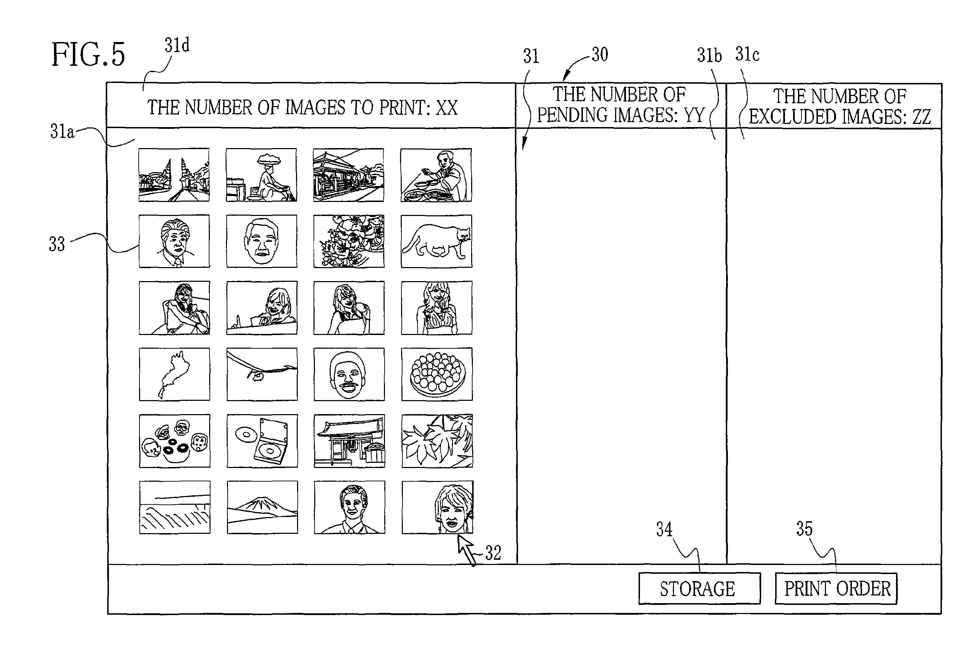

To sort the thumbnails, the user actuates the thumbnail sorting program 29 by operating the mouse 14 and the keyboard 15. When the thumbnail sorting program 29 is actuated, the display controller 26 controls the monitor 12 to display a thumbnail sorting window 30, as shown in Fig.5.

The thumbnail sorting window 30 includes a workspace 31, and a mouse pointer 32 is also displayed on the screen 12a. The pointer 32 moves on the screen 12a with the motion of the mouse 14, and the user can move the thumbnails 33 within the workspace 31 using the pointer 32.

The workspace 31 is divided into the divisions 31a to 31c; the first division 31a is for ordering printing, the second division 31b is for pending, and the third division 31c is for excluding from printing. These divisions 31a to 31c are arranged side by side on the same screen 12a. In the illustrated example, all thumbnails 33 are initially displayed in the first division 31a by default. In a margin 31d of each division is indicated the number of thumbnails 33 allocated to that division.

Placing the thumbnails 33 in the first division 31a is for ordering printing the images represented by those thumbnails 33. On the other hand, placing the thumbnails 33 in the third division 31c is for excluding the corresponding images from printing. Concerning those thumbnails 33 on which the user cannot instantly decide whether to print the corresponding images or not, the user has a choice to place these thumbnails 33 in the second division 31b for pending. Thus, the thumbnails 33 are sorted into ones for printing, ones excluded from printing, and pending ones, by leaving the thumbnail 33 in the first division 31a, or moving the thumbnail 33 from the first division 31a to the third or the second division 31c or 31b, respectively.

The window 30 displays a storage button 34 and a print order button 35 beside the workspace 31. A click on the storage button 34 causes the work table 28 to store the present state of the thumbnails 33 sorted into the divisions 31a to 31c of the workspace 31. A click on the print order button 35 generates an instruction to print the images corresponding to those thumbnails 33 placed in the first division 31a. In this embodiment, an order for printing the image is sent via the Internet 16 to a photo-lab. Even while the print order button 35 is clicked, not only the images corresponding to the thumbnails 33 placed in the third division 31c but also the images corresponding to the thumbnails 33 placed in the second division 31b for pending are excluded from the order for printing.

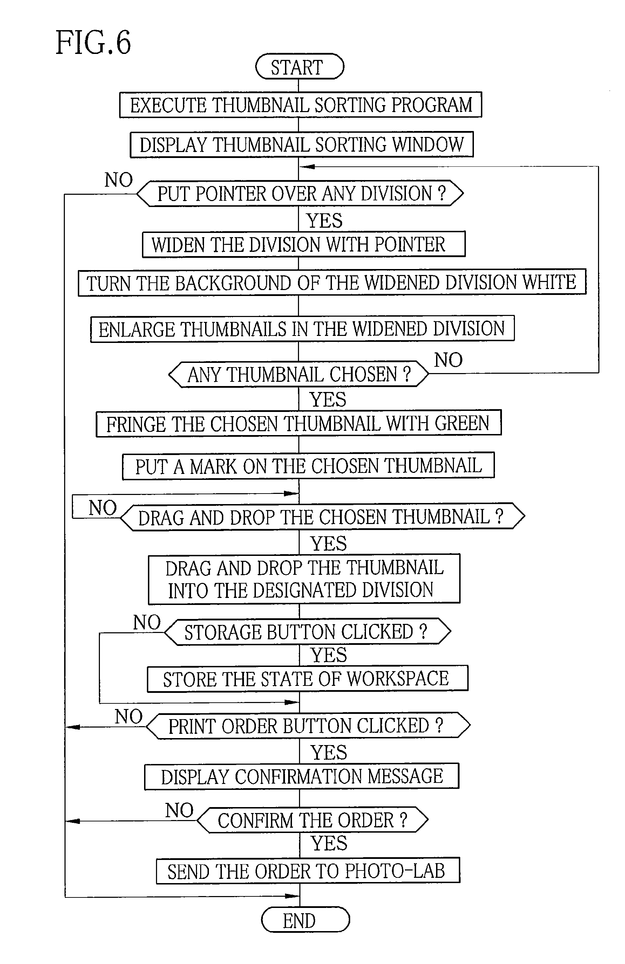

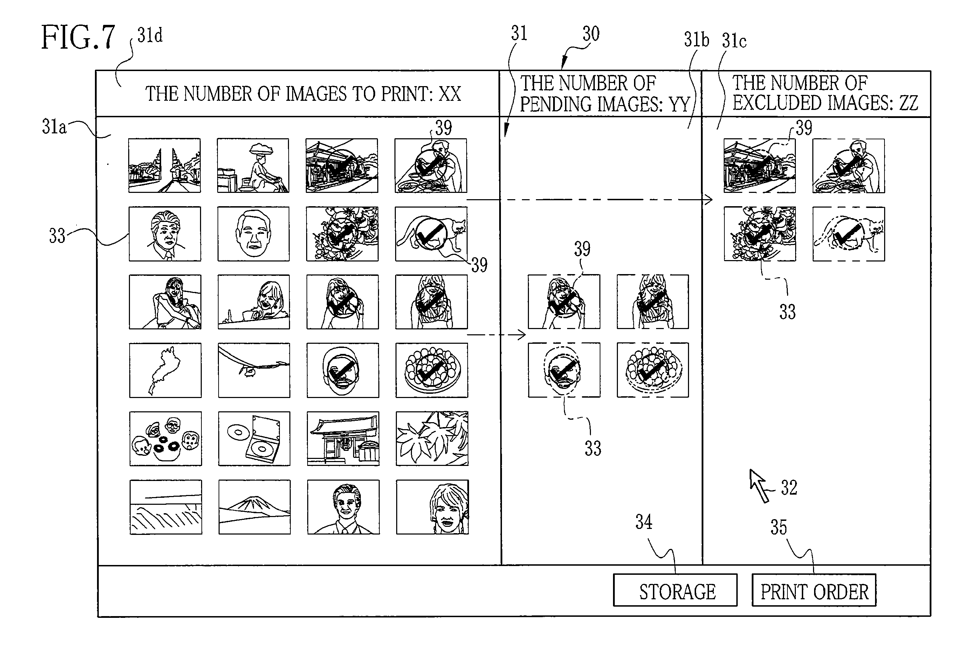

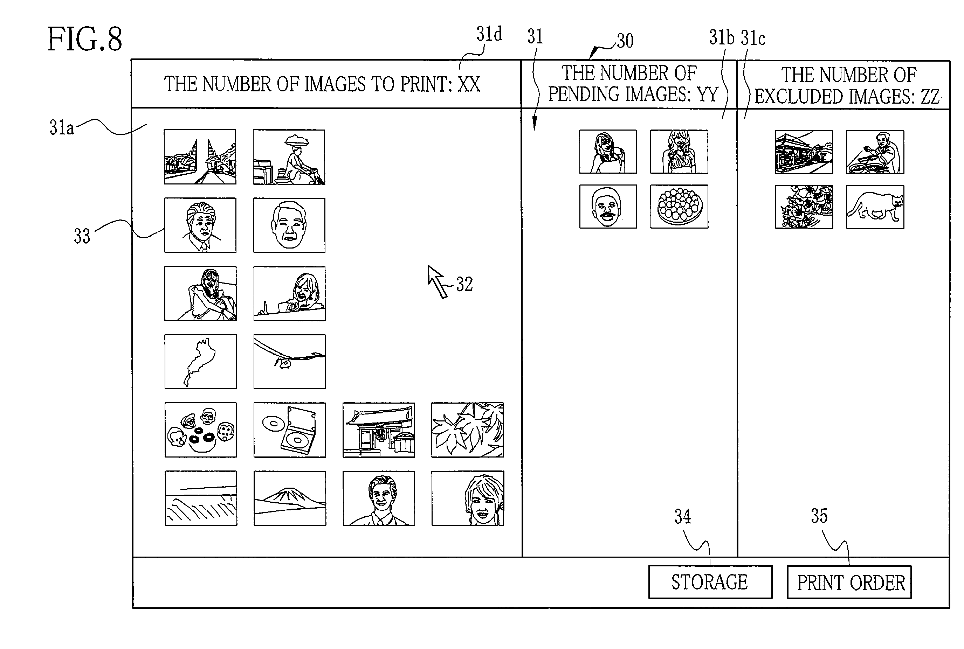

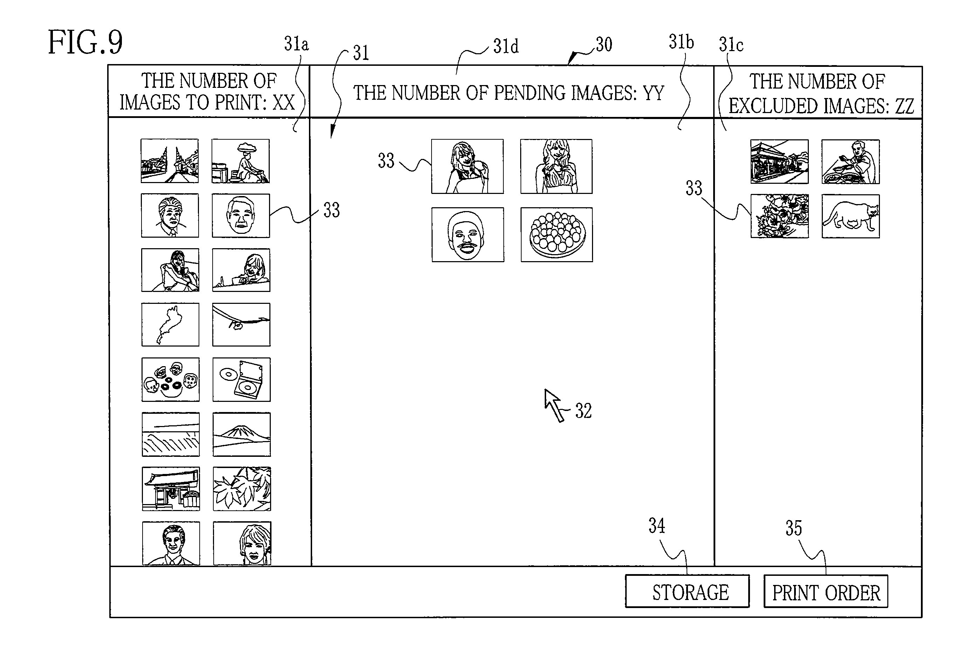

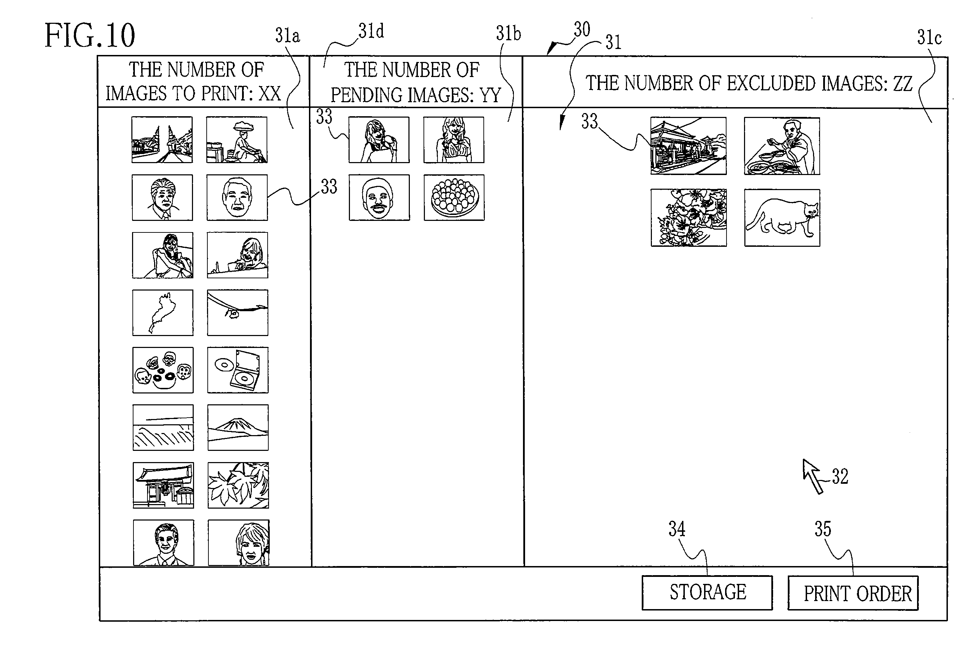

Now the procedure for sorting thumbnails on the personal computer 11 will be described with reference to Figs.6 to 10.

The user operates the mouse 14 or the keyboard 15 to execute the thumbnail sorting program 29. As the thumbnail sorting program 29 starts, the thumbnail sorting window 30 appears on the screen 12a of the monitor 12. In the present embodiment, the thumbnail sorting window 30 initially displays all the thumbnails 33 in the first division 31a of the workspace 31. Displaying all the thumbnails 33 in the division 31a for printing by default improves space efficiency on the screen 12a, because it is unnecessary to provide a specific division for displaying unsorted thumbnails 33. In addition, because the user need not move the thumbnails of the images for printing, work efficiency of the thumbnail sorting is also improved.

In the present embodiment, putting the pointer 32 over one of the divisions 31a to 31c will make the one division wider than other divisions. Moreover, in the pointed and widened division, the thumbnails 33 are displayed in a larger size than the thumbnails 33 in other divisions. Furthermore, the background of the widened division turns from solid gray to solid white, while the backgrounds of other divisions are solid gray. Thus, the thumbnails 33 are made more visible and identifiable in the division designated by the pointer 32.

The user can choose any one of the thumbnails 33 by putting the pointer 32 over the one thumbnail 33, and drag the chosen thumbnail 33 to another division by moving the pointer 32. The chosen thumbnail 33 is highlighted, for example, with a green fringe, and/or a certain mark 39 is put on the chosen thumbnail 33. The user can also choose two or more thumbnails 33 at a time by range-specification. The thumbnails 33 confined in the specified range are chosen to be moved to another division. The whole area of the specified range or the peripheries of the thumbnails 33 within the specified range may be highlighted, for example, colored green, and/or the predetermined marks 39 are put on the chosen thumbnails 33.

When the chosen thumbnail or thumbnails 33 represent the images to be excluded from printing, the chosen thumbnail or thumbnails 33 are dragged from the first division 31a and dropped into the third division 31c. When the chosen thumbnail or thumbnails 33 represent the pending images that the user cannot decide whether to print or not, the chosen thumbnail or thumbnails 33 are dragged from the first division 31a and dropped into the second division 31b. With the movement of the pointer 32, the background of the division 31c or 31b over which the pointer 32 hovers changes the color, for example, turns green. As the thumbnail 33 is thus moved from one division to another, the present state of the respective divisions 31a to 31c as well as the positions of the thumbnails 33 in the workspace 31 are memorized in the work table 28. Also the numbers of thumbnails 33 contained in the respective divisions 31a to 31c, as displayed in the margins 31d, are revised correspondingly.

After dragging and dropping any of the thumbnails 33 from the first division 31a into the second or third division 31b or 31c in the manner as described above, the user can move any of the thumbnails 33 between the respective divisions 31a to 31c. Thus, the user can sort the thumbnails 33 into three groups on the same screen 12a. Since the second division 31b is provided for those thumbnails 33 which the decision about printing of the corresponding images is pending, the user can arbitrary sort the thumbnails 33 into the divisions 31a to 31c with high efficiency without the need for tracing back the thumbnails 33 of the pending images.

When the user clicks on the storage button 34, the present sorting state of the thumbnails 33 on the workspace 31 is stored in the work table 28 in the form of a file with a name specified by the user. The stored state of the workspace 31 may be reproduced afterwards on the screen 12a, for example, by double-clicking the file on a file list.

When the user clicks on the print order button 35, a confirmation message pops up to ask the user whether the order of printing should actually be issued. Upon the order being confirmed, image data of merely those images which correspond to the thumbnails 33 placed in the first division 31a is sent to the photo-lab via the Internet 16 along with an instruction to print the designated images.

In the above embodiment, the workspace 31 is divided into three divisions 31a to 31c for sorting the thumbnails 33 into a group for printing, a group for excluding from printing, and a group for pending. However, the number of divisions is not limited to this embodiment, but may vary appropriately. For example, a division for sorting images for reprinting may be provided in addition to the above divisions. In that case, the thumbnail 33 of the image to be reprinted should preferably be placed in the division for reprinting through copy-and-paste of the thumbnail 33 in the division 31a for printing.

Although the above embodiment assumes that a photo-print is made from the original image that corresponds to the thumbnail 33 placed in the division 31a for printing, it is possible to configure that the user can designate the number of hard copies to be made from the individual image.

The embodiment of the present invention has been described with respect to the thumbnail sorting for sorting out images to be printed from others. However, the present invention is useful for other applications, for example, for sorting out thumbnails of images or other contents to be recorded on a recording medium, or for sorting out thumbnails of contents to be downloaded via the Internet. The contents may include images, videos, music pieces, games and the like. The original images are not limited to the photographic images, but may be any images including those downloaded via the Internet or from a recording medium.

Although an instruction and image data for printing are sent from a user CT personal computer to a designated photo-lab via the Internet in the above embodiment, the present invention is also applicable to other cases, such as where the image data and instruction for printing are sent from a user CT computer to a user CT printer, or from a print order input terminal installed in a retail shop to a designated photo-lab.

The thumbnail sorting apparatus of the present invention is configured to be a personal computer in the above embodiment, the present invention is applicable to any other electronic devices that deal with the contents, such as print order input terminals installed in retail shops, photo storage devices, digital cameras and cell-phones.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A thumbnail sorting apparatus for sorting thumbnails according to the use of contents represented by the thumbnails, comprising:
a display device (12,26) for displaying first to third thumbnail allocating divisions (31a,31b,31c) on a screen;
an operating device (14,15) for a user to move the thumbnails between said thumbnail allocating divisions; and
a control device (21,24) for sorting the contents into groups corresponding to the allocation of the thumbnails to said first to third thumbnail allocating divisions, wherein
the user allocates one thumbnail to said first thumbnail allocating division (31a) when the user decides to use the content corresponding to said one thumbnail;
the user allocates one thumbnail to said second thumbnail allocating division (31b) when the user cannot decide whether to use the content corresponding to said one thumbnail; and
the user allocates one thumbnail to said third thumbnail allocating division (31c) when the user decides not to use the content corresponding to said one thumbnail.

2. The thumbnail sorting apparatus as claimed in claim 1, wherein the user may sort the thumbnails according to whether the corresponding contents should be sent to an external device or not, or received from an external device or not.

3. The thumbnail sorting apparatus as claimed in claim 1, wherein the contents include image data, video data, audio data and game software.

4. The thumbnail sorting apparatus as claimed in claim 1, wherein the contents include data of photographic images captured by a digital camera (13), wherein the user allocates one thumbnail to said first thumbnail allocating division when the user decides to print the photographic image corresponding to said one thumbnail, the user allocates one thumbnail to said second thumbnail allocating division when the user cannot decide whether to print the photographic image corresponding to said one thumbnail, and the user allocates one thumbnail to said third thumbnail allocating division when the user decides not to print the photographic image corresponding to said one thumbnail; and wherein data of the photographic images represented by those thumbnails allocated to said first thumbnail allocating division is sent to an external device for printing in response to an instruction entered by the user.

5. The thumbnail sorting apparatus as claimed in claim 4, wherein the thumbnails of all photographic images are initially displayed in said first thumbnail allocating division.

6. The thumbnail sorting apparatus as claimed in any one of claims 1 to 5, further comprising a storage device (28) for memorizing data of the thumbnails as being allocated to said first to third thumbnail allocating divisions.

7. The thumbnail sorting apparatus as claimed in any one of claims 1 to 6, wherein said operating device permits the user to drag and drop the thumbnails between said thumbnail allocating divisions.

8. The thumbnail sorting apparatus as claimed in any one of claims 1 to 7, wherein said display device can display said first to third thumbnail allocating divisions in variable sizes.

9. The thumbnail sorting apparatus as claimed in claim 8, wherein said display device can display the thumbnails in different sizes between said first to third thumbnail allocating divisions.

10. A thumbnail sorting method for sorting thumbnails according to the use of contents represented by the thumbnails, comprising the steps of:
displaying first to third divisions (31a,31b,31c) on a screen;
moving the thumbnails between said first to third divisions to allocate the thumbnails to any of said first to third divisions; and
sorting the contents into groups corresponding to the allocation of the thumbnails to said first to third divisions, such that the contents corresponding to those thumbnails allocated to said first division (31a) are used, that the use of the contents corresponding to those thumbnails allocated to said second division (31b) is pending, and that the contents corresponding to those thumbnails allocated to said third division (31c) are not used.

11. The thumbnail sorting method as claimed in claim 10, wherein the thumbnails are sorted according to whether the corresponding contents should be sent to an external device or not, or received from an external device or not, wherein the contents corresponding to those thumbnails allocated to said first division are decided to be sent to or received from an external device, and the contents corresponding to those thumbnails allocated to said third division are decided not to be sent to or received from an external device, whereas the contents corresponding to those thumbnails allocated to said second division are regarded as pending.

12. The thumbnail sorting method as claimed in claim 11, wherein the contents include data of photographic images captured by a digital camera (13), wherein one thumbnail is allocated to said first division when data of the photographic image corresponding to said one thumbnail should be sent to an external device for printing, whereas one thumbnail is allocated to said second division when it is not decided whether to print the photographic image corresponding to said one thumbnail, and one thumbnail is allocated to said third division to exclude the photographic image corresponding to said one thumbnail from printing.

13. The thumbnail sorting method as claimed in claim 12, wherein the thumbnails of all photographic images are initially displayed in said first division.

14. A thumbnail sorting program for sorting thumbnails according to the use of contents represented by the thumbnails, said program actuating a computer to execute the steps of:
displaying first to third divisions (31a,31b,31c) on a screen;
moving the thumbnails from one division to another according to instructions from a user to allocate the thumbnails to any of said first to third divisions; and
sorting the contents into groups corresponding to the allocation of the thumbnails to said first to third divisions, such that the contents corresponding to those thumbnails allocated to said first division (31a) are used, that the use of the contents corresponding to those thumbnails allocated to said second division (31b) is pending, and that the contents corresponding to those thumbnails allocated to said third division (31c) are not used.

15. The thumbnail sorting program as claimed in claim 14, wherein the thumbnails are sorted according to whether the corresponding contents should be sent to an external device or not, or received from an external device or not, wherein the contents corresponding to those thumbnails allocated to said first division are decided to be sent to or received from an external device, and the contents corresponding to those thumbnails allocated to said third division are decided not to be sent to or received from an external device, whereas the contents corresponding to those thumbnails allocated to said second division are regarded as pending.
